# EUROPEAN PATENT APPLICATION

(11) **EP 4 815 252 A1**
(43) Date of publication of application: **30.09.2026**
(21) Application number: 26157230.9
(22) Date of filing: 09.02.2026
(51) Int. Cl.: H02J 7/56, H02J 3/32, H02J 3/38, H02J 7/52

(54) **ENERGY STORAGE SYSTEM AND ACTIVE EQUALIZATION METHOD**

(30) Priority: 29.03.2025 CN 202510404452
(71) Applicant: Huawei Technologies Co., Ltd., Shenzhen, Guangdong 518129 (CN)
(72) Inventor: Li, Shirong, Shenzhen, Guangdong, 518129 (CN); Wu, Yihong, Shenzhen, Guangdong, 518129 (CN); Huang, Yong, Shenzhen, Guangdong, 518129 (CN)
(74) Representative: Grünecker Patent- und Rechtsanwälte PartG mbB

(57) **Abstract**

This application provides an energy storage system and an active equalization method. The energy storage system includes a plurality of battery modules, a direct current bus, and a battery management system, and each of the battery modules is connected to the direct current bus. When active equalization is performed on the plurality of battery modules, the battery management system is configured to obtain n pairs of battery modules from the plurality of battery modules through pairing. A first battery parameter of each of the n pairs of battery modules is greater than or equal to a first preset parameter value. Each pair of battery modules includes a first battery module and a second battery module, and a voltage of the first battery module is greater than a voltage of the second battery module. The first battery parameter is an absolute value of a difference between a maximum voltage value and a minimum voltage value of the battery modules. Further, the battery management system is further configured to control the first battery module in the pair of battery modules to charge the second battery module through the direct current bus. Based on this application, active equalization efficiency of the plurality of battery modules can be improved, and a battery capacity difference between the plurality of battery modules can be reduced more quickly.

## Description

### TECHNICAL FIELD

This application relates to the field of battery energy storage technologies, and in particular, to an energy storage system and an active equalization method.

### BACKGROUND

In an energy storage system, a power converter is configured to convert a direct current output by a battery cluster, and then supply power to a load, where the battery cluster usually includes a plurality of battery modules connected in series. However, as a running time of the energy storage system elapses, a battery capacity difference between the plurality of battery modules in the battery cluster also increases increasingly. Consequently, a capacity mismatch problem occurs in a charge and discharge process of the battery cluster, and a power requirement of the energy storage system for supplying power to the load cannot be met. Therefore, how to reduce the battery capacity difference between the plurality of battery modules is one of technical problems to be urgently resolved currently.

### SUMMARY

This application provides an energy storage system and an active equalization method, to improve active equalization efficiency of a plurality of battery modules, and reduce a battery capacity difference between the plurality of battery modules more quickly.

According to a first aspect, an embodiment of this application provides an energy storage system. The energy storage system includes a plurality of battery modules, a direct current bus, and a battery management system, and each of the plurality of battery modules is connected to the direct current bus. When active equalization is performed on the plurality of battery modules, the battery management system is configured to obtain n pairs of battery modules from the plurality of battery modules through pairing. A first battery parameter of each of the n pairs of battery modules is greater than or equal to a first preset parameter value. Each of the n pairs of battery modules includes a first battery module and a second battery module, and a voltage of the first battery module is greater than a voltage of the second battery module. The first battery parameter may be an absolute value of a difference between a maximum voltage value and a minimum voltage value of the battery modules. Further, the battery management system is further configured to control the first battery module in the pair of battery modules to charge the second battery module through the direct current bus, so as to reduce a battery capacity difference between the first battery module and the second battery module in the pair of battery modules. In this active equalization process, the first battery module is in a discharging state, and the second battery module is in a charging state. During implementation of this embodiment of this application, because a rated power for charging or discharging of a battery module is constant, charging and discharging of each pair of battery modules are controlled in pairs, so that it can be ensured that a quantity of battery modules in a charging state is the same as a quantity of battery modules in a discharging state (in other words, both of the quantities are n). and each pair of battery modules always runs at full power in a charge and discharge process, thereby improving active equalization efficiency of the plurality of battery modules, and reducing a battery capacity difference between the plurality of battery modules more quickly.

In a possible implementation, when active equalization is performed on the plurality of battery modules, the battery management system is configured to select m battery modules from the plurality of battery modules. A first battery parameter of each of the m battery modules is greater than or equal to the first preset parameter value. The m battery modules may be sorted in descending order or in ascending order of voltages of the battery modules. It should be understood that when a first battery parameter of a battery module is greater than or equal to the first preset parameter value, the battery module is a to-be-equalized battery module. Therefore, all the m battery modules are to-be-equalized battery modules. Further, the battery management system is further configured to pair an i^{th} battery module in the m battery modules with an (m+1-i)^{th} battery module, to obtain the n pairs of battery modules. During implementation of this embodiment of this application, the m to-be-equalized battery modules may be paired in pairs based on values of voltages of the battery modules, to ensure that the n pairs of paired battery modules always run at full power in a charge and discharge process, thereby improving active equalization efficiency of the plurality of battery modules.

In a possible implementation, the energy storage system further includes a plurality of direct current converters, and the plurality of direct current converters are in a one-to-one correspondence with the plurality of battery modules. Each battery module is connected to the direct current bus by using a corresponding direct current converter. For each of the pairs of battery modules, a direct current converter corresponding to the first battery module is configured to perform voltage conversion on a voltage output by the first battery module, and supply power to the direct current bus. A direct current converter corresponding to the second battery module is configured to perform voltage conversion on a voltage output by the direct current bus, and charge the second battery module. During implementation of this embodiment of this application, because a rated power for charging or discharging of a direct current converter is constant, charging and discharging of a direct current converter corresponding to each pair of battery modules are controlled in pairs, so that it can be ensured that a quantity of direct current converters in a charging state is the same as a quantity of direct current converters in a discharging state (in other words, both of the quantities are n), and the direct current converter corresponding to each pair of battery modules always runs at full power in a charge and discharge process, thereby improving active equalization efficiency of the plurality of battery modules, and reducing a battery capacity difference between the plurality of battery modules more quickly. In addition, in this active equalization process, control logic based on an equalization algorithm model does not need to be used, so that control complexity of the direct current converter is reduced, and maintenance costs of the energy storage system are reduced.

In a possible implementation, in a process of performing charging and discharging by the direct current converter corresponding to each pair of battery modules, when an output parameter of a direct current converter corresponding to any pair of battery modules is greater than or equal to a second preset parameter value, the battery management system is configured to control the direct current converter corresponding to the any pair of battery modules to stop charging or discharging. The output parameter includes an output voltage or an output current of the direct current converter. It should be understood that, when an output voltage of a direct current converter corresponding to any battery module is greater than or equal to a second preset parameter value, an overvoltage fault occurs in the direct current converter corresponding to the any battery module. When an output current of the direct current converter corresponding to the any battery module is greater than or equal to the second preset parameter value, an overcurrent fault occurs in the direct current converter corresponding to the any pair of battery modules. During implementation of this embodiment of this application, when a recoverable fault (for example, an overvoltage fault or an overcurrent fault) occurs in a direct current converter corresponding to any battery module, direct current converters corresponding to any pair of battery modules may be controlled in pairs to stop charging or discharging, so as to isolate a faulty direct current converter to prevent a fault from spreading to another direct current converter that runs normally, thereby reducing a potential risk caused by the fault and scheduling policy complexity. In addition, when the direct current converter corresponding to the any pair of battery modules stops charging or discharging and no longer performs active equalization, another direct current converter that runs normally continues to perform active equalization, so that this can avoid the fact that all direct current converters corresponding to the n pairs of battery modules stop charging or discharging, thereby reducing impact on active equalization efficiency of the plurality of battery modules.

In a possible implementation, in a fault recovery process of the direct current converter corresponding to the any pair of battery modules, an output parameter of the direct current converter corresponding to the any pair of battery modules gradually decreases to be less than the second preset parameter value, in other words, the fault of the direct current converter corresponding to the any pair of battery modules is recovered. In this case, the battery management system is further configured to control the direct current converter corresponding to the any pair of battery modules to resume charging or discharging. During implementation of this embodiment of this application, when a fault of a direct current converter corresponding to any pair of battery modules is recovered, the direct current converter corresponding to the any pair of battery modules may be re-controlled to resume charging or discharging, thereby avoiding affecting active equalization efficiency of the plurality of battery modules.

In a possible implementation, in a process of performing charging and discharging by the direct current converter corresponding to each pair of battery modules, in first duration, when a quantity of times the direct current converter corresponding to the any pair of battery modules stops charging or discharging is greater than or equal to a third preset parameter value, in other words, when an unrecoverable fault occurs in the direct current converter corresponding to the any pair of battery modules, the battery management system is configured to control a direct current converter corresponding to each of the n pairs of battery modules to stop charging or discharging. During implementation of this embodiment of this application, an unrecoverable fault that occurs in a direct current converter can be prevented from spreading to another direct current converter that runs normally, thereby improving use safety and a service life of the direct current converters corresponding to the n pairs of battery modules.

In a possible implementation, after the first battery module in the pair of battery modules charges the second battery module for second duration through the direct current bus, the battery management system is configured to control a direct current converter corresponding to each of the n pairs of battery modules to stop charging or discharging. The second duration is active equalization duration of the direct current converter. During implementation of this embodiment of this application, active equalization duration of a direct current converter is limited, to avoid an increase in a capacity difference between battery modules caused by excessively long charging and discharging duration of a direct current converter corresponding to each pair of battery modules, thereby improving the active equalization efficiency of the plurality of battery modules.

According to a second aspect, an embodiment of this application provides an energy storage system. The energy storage system includes a plurality of battery modules, a direct current bus, and a battery management system, and each of the plurality of battery modules is connected to the direct current bus. When active equalization is performed on the plurality of battery modules, the battery management system is configured to obtain s pairs of battery modules from the plurality of battery modules through pairing. A second battery parameter of each of the s pairs of battery modules is greater than or equal to a fourth preset parameter value. Each of the s pairs of battery modules includes a third battery module and a fourth battery module. and a third battery parameter of the third battery module is greater than a third battery parameter of the fourth battery module. The second battery parameter is an absolute value of a difference between a state of charge of the battery module and an average value of states of charge of the plurality of battery modules, and the third battery parameter is the difference between the state of charge of the battery module and the average value of the states of charge. Further, the battery management system is further configured to control the third battery module in the pair of battery modules to charge the fourth battery module through the direct current bus, so as to reduce a battery capacity difference between the third battery module and the fourth battery module in the pair of battery modules. During implementation of this embodiment of this application, each pair of battery modules can always run at full power in a charge and discharge process, thereby improving active equalization efficiency of the plurality of battery modules, and reducing a battery capacity difference between the plurality of battery modules more quickly.

In a possible implementation, when active equalization is performed on the plurality of battery modules, the battery management system is configured to select j battery modules from the plurality of battery modules. A second battery parameter of each of the j battery modules is greater than or equal to a fourth preset parameter value. The j battery modules may be sorted in descending order or in ascending order of third battery parameters of the battery modules. Further, the battery management system is further configured to pair a k^{th} battery module in the j battery modules with a (j+1-k)^{th} battery module, to obtain the s pairs of battery modules. During implementation of this embodiment of this application, the j to-be-equalized battery modules may be paired in pairs based on values of third battery parameters of the battery modules, to ensure that the s pairs of paired battery modules always run at full power in a charge and discharge process, thereby improving active equalization efficiency of the plurality of battery modules.

In a possible implementation, the energy storage system further includes a plurality of direct current converters, and the plurality of direct current converters are in a one-to-one correspondence with the plurality of battery modules. Each battery module is connected to the direct current bus by using a corresponding direct current converter. For each of the pairs of battery modules, a direct current converter corresponding to the third battery module is configured to perform voltage conversion on a voltage output by the third battery module, and supply power to the direct current bus. A direct current converter corresponding to the fourth battery module is configured to perform voltage conversion on a voltage output by the direct current bus, and charge the fourth battery module. During implementation of this embodiment of this application, in this active equalization process, control logic based on an equalization algorithm model does not need to be used, so that control complexity of the direct current converter is reduced, and maintenance costs of the energy storage system are reduced.

In a possible implementation, in a process of performing charging and discharging by the direct current converter corresponding to each pair of battery modules, when an output parameter of a direct current converter corresponding to any pair of battery modules is greater than or equal to a second preset parameter value, the battery management system is configured to control the direct current converter corresponding to the any pair of battery modules to stop charging or discharging. The output parameter includes an output voltage or an output current of the direct current converter. During implementation of this embodiment of this application, a faulty direct current converter may be isolated to prevent a fault from spreading to another direct current converter that runs normally, thereby reducing a potential risk caused by the fault and scheduling policy complexity. In addition, this can further avoid the fact that all direct current converters corresponding to the s pairs of battery modules stop charging or discharging, thereby reducing impact on active equalization efficiency of the plurality of battery modules.

In a possible implementation, in a fault recovery process of the direct current converter corresponding to the any pair of battery modules, an output parameter of the direct current converter corresponding to the any pair of battery modules gradually decreases to be less than the second preset parameter value, in other words, the fault of the direct current converter corresponding to the any pair of battery modules is recovered. In this case, the battery management system is further configured to control the direct current converter corresponding to the any pair of battery modules to resume charging or discharging, thereby avoiding the impact on the active equalization efficiency of the plurality of battery modules.

In a possible implementation, in a process of performing charging and discharging by the direct current converter corresponding to each pair of battery modules, in first duration, when a quantity of times the direct current converter corresponding to the any pair of battery modules stops charging or discharging is greater than or equal to a third preset parameter value, the battery management system is configured to control a direct current converter corresponding to each of the s pairs of battery modules to stop charging or discharging. During implementation of this embodiment of this application, an unrecoverable fault that occurs in a direct current converter can be prevented from spreading to another direct current converter that runs normally, thereby improving use safety and a service life of the direct current converters corresponding to the s pairs of battery modules.

In a possible implementation, after the third battery module in the pair of battery modules charges the fourth battery module for second duration through the direct current bus, the battery management system is configured to control a direct current converter corresponding to each of the s pairs of battery modules to stop charging or discharging. During implementation of this embodiment of this application, active equalization duration of a direct current converter is limited, to avoid an increase in a capacity difference between battery modules caused by excessively long charging and discharging duration of a direct current converter corresponding to each pair of battery modules, thereby improving the active equalization efficiency of the plurality of battery modules.

According to a third aspect, an embodiment of this application provides an active equalization method for an energy storage system. The active equalization method is usually performed by a battery management system in the energy storage system. When active equalization is performed on the plurality of battery modules, the battery management system obtains n pairs of battery modules from the plurality of battery modules through pairing. The energy storage system includes a plurality of battery modules, a direct current bus, and a battery management system, and each of the plurality of battery modules is connected to the direct current bus. A first battery parameter of each of the n pairs of battery modules is greater than or equal to a first preset parameter value. Each of the n pairs of battery modules includes a first battery module and a second battery module, and a voltage of the first battery module is greater than a voltage of the second battery module. The first battery parameter may be an absolute value of a difference between a maximum voltage value and a minimum voltage value of the battery modules. Further, the battery management system controls the first battery module in the pair of battery modules to charge the second battery module through the direct current bus. During implementation of this embodiment of this application, each pair of battery modules can always run at full power in a charge and discharge process, thereby improving active equalization efficiency of the plurality of battery modules, and reducing a battery capacity difference between the plurality of battery modules more quickly.

In a possible implementation, when active equalization is performed on the plurality of battery modules, the battery management system selects m battery modules from the plurality of battery modules. A first battery parameter of each of the m battery modules is greater than or equal to the first preset parameter value. The m battery modules may be sorted in descending order or in ascending order of voltages of the battery modules. Further, the battery management system pairs an i^{th} battery module in the m battery modules with an (m+1-i)^{th} battery module, to obtain the n pairs of battery modules.

In a possible implementation, for each of the pairs of battery modules, the battery management system controls a direct current converter corresponding to the first battery module to perform voltage conversion on a voltage output by the first battery module and supply power to the direct current bus, and controls a direct current converter corresponding to the second battery module to perform voltage conversion on a voltage output by the direct current bus and charge the second battery module. The energy storage system further includes a plurality of direct current converters, the plurality of direct current converters are in a one-to-one correspondence with the plurality of battery modules, and each of the battery modules is connected to the direct current bus by using a corresponding direct current converter.

In a possible implementation, when an output parameter of a direct current converter corresponding to any pair of battery modules is greater than or equal to a second preset parameter value, the battery management system controls the direct current converter corresponding to the any pair of battery modules to stop charging or discharging. The output parameter includes an output voltage or an output current of the direct current converter.

In a possible implementation, in a fault recovery process of the direct current converter corresponding to the any pair of battery modules, an output parameter of the direct current converter corresponding to the any pair of battery modules gradually decreases to be less than the second preset parameter value, in other words, the fault of the direct current converter corresponding to the any pair of battery modules is recovered. In this case, the battery management system controls the direct current converter corresponding to the any pair of battery modules to resume charging or discharging.

In a possible implementation, in first duration, when a quantity of times the direct current converter corresponding to the any pair of battery modules stops charging or discharging is greater than or equal to a third preset parameter value, in other words, when an unrecoverable fault occurs in the direct current converter corresponding to the any pair of battery modules, the battery management system controls a direct current converter corresponding to each of the n pairs of battery modules to stop charging or discharging.

In a possible implementation, after the first battery module in the pair of battery modules charges the second battery module for second duration through the direct current bus, the battery management system controls a direct current converter corresponding to each of the n pairs of battery modules to stop charging or discharging.

According to a fourth aspect, an embodiment of this application provides an active equalization method for an energy storage system. When active equalization is performed on the plurality of battery modules, the battery management system obtains s pairs of battery modules from the plurality of battery modules through pairing. The energy storage system includes a plurality of battery modules, a direct current bus, and a battery management system, and each of the plurality of battery modules is connected to the direct current bus. A second battery parameter of each of the s pairs of battery modules is greater than or equal to a fourth preset parameter value. Each of the s pairs of battery modules includes a third battery module and a fourth battery module, and a third battery parameter of the third battery module is greater than a third battery parameter of the third battery module. The second battery parameter is an absolute value of a difference between a state of charge of the battery module and an average value of states of charge of the plurality of battery modules, and the third battery parameter is the difference between the state of charge of the battery module and the average value of the states of charge. Further, the battery management system controls the third battery module in the pair of battery modules to charge the fourth battery module through the direct current bus. During implementation of this embodiment of this application, each pair of battery modules can always run at full power in a charge and discharge process, thereby improving active equalization efficiency of the plurality of battery modules, and reducing a battery capacity difference between the plurality of battery modules more quickly.

In a possible implementation, when active equalization is performed on the plurality of battery modules, the battery management system selects j battery modules from the plurality of battery modules. A second battery parameter of each of the j battery modules is greater than or equal to a fourth preset parameter value. The j battery modules may be sorted in descending order or in ascending order of third battery parameters of the battery modules. Further, the battery management system further pairs a k^{th} battery module in the j battery modules with a (j+1-k)^{th} battery module, to obtain the s pairs of battery modules.

In a possible implementation, for each of the pairs of battery modules, the battery management system controls a direct current converter corresponding to the third battery module to perform voltage conversion on a voltage output by the third battery module and supply power to the direct current bus, and controls a direct current converter corresponding to the fourth battery module to perform voltage conversion on a voltage output by the direct current bus and charge the fourth battery module. The energy storage system further includes a plurality of direct current converters, the plurality of direct current converters are in a one-to-one correspondence with the plurality of battery modules, and each of the battery modules is connected to the direct current bus by using a corresponding direct current converter.

In a possible implementation, in a process of performing active equalization on the plurality of battery modules, when an output parameter of a direct current converter corresponding to any pair of battery modules is greater than or equal to a second preset parameter value, the battery management system controls the direct current converter corresponding to the any pair of battery modules to stop charging or discharging. The output parameter includes an output voltage or an output current of the direct current converter.

In a possible implementation, in a fault recovery process of the direct current converter corresponding to the any pair of battery modules, an output parameter of the direct current converter corresponding to the any pair of battery modules gradually decreases to be less than the second preset parameter value, in other words, the fault of the direct current converter corresponding to the any pair of battery modules is recovered. In this case, the battery management system further controls the direct current converter corresponding to the any pair of battery modules to resume charging or discharging.

In a possible implementation, in first duration, when a quantity of times the direct current converter corresponding to the any pair of battery modules stops charging or discharging is greater than or equal to a third preset parameter value, the battery management system controls a direct current converter corresponding to each of the s pairs of battery modules to stop charging or discharging.

In a possible implementation, after the third battery module in the pair of battery modules charges the fourth battery module for second duration through the direct current bus, the battery management system controls a direct current converter corresponding to each of the s pairs of battery modules to stop charging or discharging.

It should be understood that mutual reference may be made to the implementations and beneficial effects of the foregoing aspects of this application.

### BRIEF DESCRIPTION OF DRAWINGS

FIG. 1 is a diagram of a structure of an energy storage system according to an embodiment of this application;
FIG. 2 is a circuit schematic of an energy storage system according to an embodiment of this application;
FIG. 3 is another circuit schematic of an energy storage system according to an embodiment of this application;
FIG. 4 is a diagram of pairing of a plurality of battery modules according to an embodiment of this application;
FIG. 5 is a diagram of interaction between a battery control unit and a battery management unit when a recoverable fault occurs in a direct current converter according to an embodiment of this application;
FIG. 6 is a diagram of interaction between a battery control unit and a battery management unit when an unrecoverable fault occurs in a direct current converter according to an embodiment of this application;
FIG. 7 is a schematic flowchart of an active equalization method for an energy storage system according to an embodiment of this application; and
FIG. 8 is another schematic flowchart of an active equalization method for an energy storage system according to an embodiment of this application.

### DESCRIPTION OF EMBODIMENTS

An energy storage system provided in this application is applicable to a commercial energy storage system, a household energy storage system, a photovoltaic energy storage power generation system, a power battery system, and another field in which an energy storage system is required to perform energy storage and backup, and is configured to implement energy balancing between battery modules.

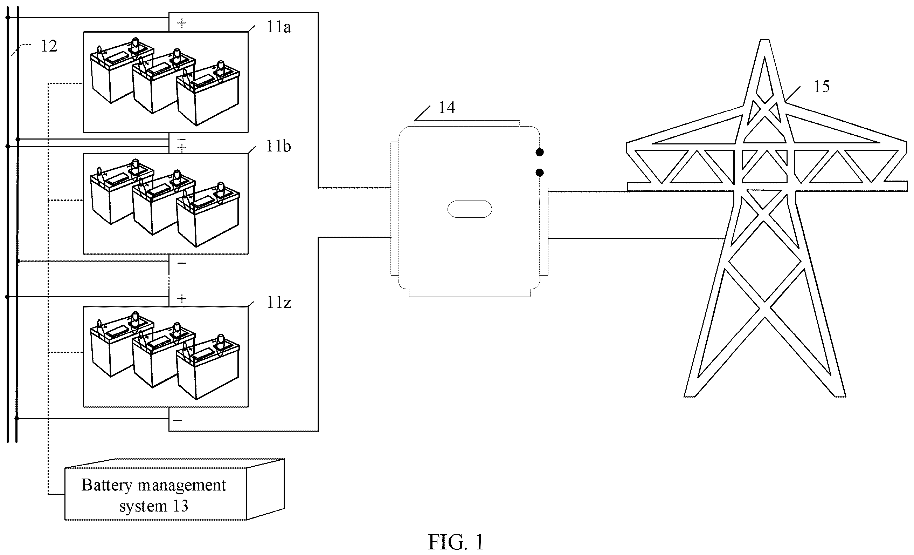

FIG. 1 is a diagram of a structure of an energy storage system according to an embodiment of this application. As shown in FIG. 1, the energy storage system includes a battery module 11a, a battery module 11b, ..., a battery module 11z, a direct current bus 12, a battery management system 13, and an energy storage converter 14. Each of the battery module 11a to the battery module 11z is connected to the direct current bus 12. The battery module 11a to the battery module 11z are connected in series and then connected to an input end of the energy storage converter 14, and an output end of the energy storage converter 14 is configured to be connected to a power grid 15. When the energy storage system supplies power to the power grid 15, the energy storage converter 14 is configured to: invert a direct current voltage, obtained after the battery module 11a to the battery module 11z are connected in series, to an alternating current voltage, and supply power to the power grid 15. In a process of supplying power to the power grid 15, the battery management system 13 is configured to implement energy balancing between the battery module 11a and the battery module 11z through the direct current bus 12, so that a battery capacity difference between the battery module 11a to the battery module 11z can be reduced, thereby avoiding a capacity mismatch problem in a charge and discharge process of the battery modules, and improving power supply reliability of the energy storage system.

It may be understood that the energy storage system may further include another device. For example, the another device includes a battery sampling module and a security system. The battery sampling module is configured to collect a battery parameter of a battery module, for example, a first battery parameter, a second battery parameter, or a third battery parameter in the following embodiment. The security system is configured to perform overcharge protection, overdischarge protection, and short-circuit protection on the battery module, to avoid damage to the battery module and improve security of the energy storage system. The foregoing is merely an example, and a specific structure of the energy storage system is not limited in this embodiment of this application.

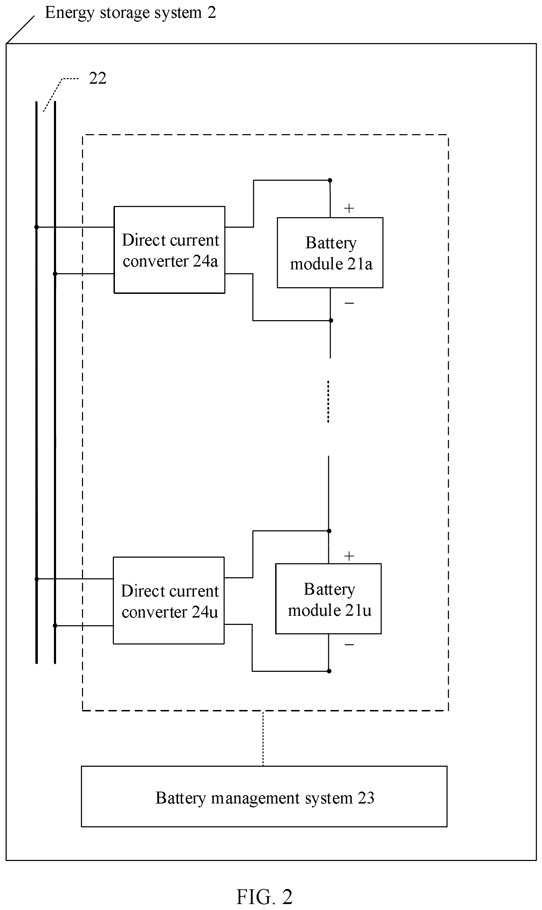

The following describes, by using examples with reference to FIG. 2 to FIG. 6, a structure of an energy storage system and two active equalization manners provided in this application.

FIG. 2 is a circuit schematic of an energy storage system according to an embodiment of this application. As shown in FIG. 2, the energy storage system 2 includes a battery module 21a to a battery module 21u, a direct current bus 22, and a battery management system 23. Each of the battery module 21a to the battery module 21u is connected to the direct current bus 22. The battery module 21a to the battery module 21u may be connected in series. Optionally, the battery module 21a to the battery module 21u may alternatively be connected in parallel. For example, each battery module may be a battery pack or a battery cell, where the battery pack may be formed by connecting a plurality of battery cells in series or in parallel.

The following describes one of the active equalization manners of the battery module 21a to the battery module 21u.

When active equalization is performed on the battery module 21a to the battery module 21u, the battery management system 23 is configured to obtain n pairs of battery modules from the battery module 21a to the battery module 21u through pairing. The active equalization herein is a process in which energy of a high-energy battery module in the battery module 21a to the battery module 21u is transferred to a low-energy battery module to implement energy transfer equalization, to reduce a battery capacity difference between the battery module 21a to the battery module 21u and finally achieve an equalization state. A first battery parameter of each of the n pairs of battery modules is greater than or equal to a first preset parameter value. The first battery parameter is an absolute value of a difference between a maximum voltage value and a minimum voltage value of the battery modules. For example, the first preset parameter value may be 10 mV or 30 mV. Each of the n pairs of battery modules includes a first battery module and a second battery module, and a voltage of the first battery module is greater than a voltage of the second battery module.

Further, the battery management system 23 is further configured to control the first battery module in the pair of battery modules to charge the second battery module through the direct current bus 22, so as to reduce a battery capacity difference between the first battery module and the second battery module in the pair of battery modules. In this active equalization process, the first battery module is in a discharging state, and the second battery module is in a charging state.

During implementation of this embodiment of this application, because a rated power for charging or discharging of a battery module is constant, charging and discharging of each pair of battery modules are controlled in pairs, so that it can be ensured that a quantity of battery modules in a charging state is the same as a quantity of battery modules in a discharging state (in other words, both of the quantities are n), and each pair of battery modules always runs at full power in a charge and discharge process, thereby improving active equalization efficiency of the battery module 21a to the battery module 21u, and reducing a battery capacity difference between the battery module 21a to the battery module 21u more quickly.

In some feasible implementations, when active equalization is performed on the battery module 21a to the battery module 21u, the battery management system 23 is configured to select m battery modules from the battery module 21a to the battery module 21u. A first battery parameter of each of the m battery modules is greater than or equal to the first preset parameter value. The m battery modules are sorted in descending order or in ascending order of voltages of the battery modules. It should be understood that when a first battery parameter of a battery module is greater than or equal to the first preset parameter value, the battery module is a to-be-equalized battery module. Therefore, all the m battery modules are to-be-equalized battery modules. Further, the battery management system 23 is further configured to pair an i^{th} battery module in the m battery modules with an (m+1-i)^{th} battery module, to obtain the n pairs of battery modules. It should be understood that when m is an even number, n is 0.5m. When m is an odd number, n is a value obtained by rounding down 0.5m (that is, $n = \left⌊0.5m\right⌋$), and a ${\left(\left⌊0.5m\right⌋+1\right)}^{th}$ battery module is a battery module remaining after pairing in this active equalization process, and equalization is not performed in this active equalization process. During implementation of this embodiment of this application, the m to-be-equalized battery modules may be paired in pairs based on values of voltages of the battery modules, to ensure that the n pairs of paired battery modules always run at full power in a charge and discharge process, thereby improving active equalization efficiency of the battery module 21a to the battery module 21u.

It may be understood that when the m battery modules are sorted in descending order of voltages of the battery modules, in each pair of battery modules, a first battery module is an i^{th} battery module, and a second battery module is an (m+1-i)^{th} battery module. It may be understood that when the m battery modules are sorted in ascending order of voltages of the battery modules, in each pair of battery modules, a first battery module is an (m+1-i)^{th} battery module, and a second battery module is an i^{th} battery module.

In some feasible implementations, as shown in FIG. 2. the energy storage system 2 further includes a direct current converter 24a to a direct current converter 24u, and the battery module 21a to the battery module 21u are in a one-to-one correspondence with the direct current converter 24a to the direct current converter 24u. Each battery module is connected to the direct current bus 22 by using a corresponding direct current converter. Specifically, the battery module 21a is connected to the direct current bus 22 by using a corresponding direct current converter 24a, ..., and the battery module 21u is connected to the direct current bus 22 by using a corresponding direct current converter 24u. For example, each direct current converter is a direct current converter having a bidirectional buck/boost function. The direct current converter may also be referred to as an active equalization module (active equalization module, AEM), and is configured to implement power distribution of battery modules by actively scheduling charging and discharging of the battery modules.

For each of the n pairs of battery modules, a direct current converter corresponding to the first battery module is configured to perform voltage conversion on a voltage output by the first battery module, and supply power to the direct current bus 22. A direct current converter corresponding to the second battery module is configured to perform voltage conversion on a voltage output by the direct current bus 22, and charge the second battery module. During implementation of this embodiment of this application, because a rated power for charging or discharging of a direct current converter is constant, charging and discharging of a direct current converter corresponding to each pair of battery modules are controlled in pairs, so that it can be ensured that a quantity of direct current converters in a charging state is the same as a quantity of direct current converters in a discharging state (in other words, both of the quantities are n), and the direct current converter corresponding to each pair of battery modules always runs at full power in a charge and discharge process, thereby improving active equalization efficiency of the battery module 21a to the battery module 21u, and reducing a battery capacity difference between the battery module 21a to the battery module 21u more quickly. In addition, in this active equalization process, control logic based on an equalization algorithm model does not need to be used, so that control complexity of the direct current converter is reduced, and maintenance costs of the energy storage system 2 are reduced. The full power of the direct current converter is a maximum power that can be stably output for a long time by the direct current converter in a normal working state.

In some feasible implementations, in a process of performing charging and discharging by the direct current converter corresponding to each pair of battery modules, when an output parameter of a direct current converter corresponding to any pair of battery modules is greater than or equal to a second preset parameter value, the battery management system 23 is configured to control the direct current converter corresponding to the any pair of battery modules to stop charging or discharging. The output parameter includes an output voltage or an output current of the direct current converter. It should be understood that, when an output voltage of a direct current converter corresponding to any pair of battery modules is greater than or equal to a second preset parameter value, an overvoltage fault occurs in the direct current converter corresponding to the any pair of battery modules. For example, when the direct current converter charges the corresponding battery module, the second preset parameter value may be 220 V or 222 V When the direct current converter supplies power to the direct current bus 22, the second preset parameter value may be 451 V, 465 V, or 475 V. When an output current of the direct current converter corresponding to the any pair of battery module is greater than or equal to the second preset parameter value, an overcurrent fault occurs in the direct current converter corresponding to the any pair of battery modules. For example, when the direct current converter charges the corresponding battery module, the second preset parameter value may be 7 A, 8 A, or 16 A. When the direct current converter supplies power to the direct current bus 22, the second preset parameter value may be 20 A. During implementation of this embodiment of this application, when a recoverable fault (for example, an overvoltage fault or an overcurrent fault) occurs in a direct current converter corresponding to any pair of battery modules, direct current converters corresponding to any pair of battery modules may be controlled in pairs to stop charging or discharging, so as to isolate a faulty direct current converter to prevent a fault from spreading to another direct current converter that runs normally, thereby reducing a potential risk caused by the fault and scheduling policy complexity. In addition, when the direct current converter corresponding to the any pair of battery modules stops charging or discharging and no longer performs active equalization, another direct current converter that runs normally continues to perform active equalization, so that this can avoid the fact that all direct current converters corresponding to the n pairs of battery modules stop charging or discharging, thereby reducing impact on active equalization efficiency of the battery module 21a to the battery module 21u.

In some feasible implementations, in a fault recovery process of the direct current converter corresponding to the any pair of battery modules, an output parameter of the direct current converter corresponding to the any pair of battery modules gradually decreases to be less than the second preset parameter value. In this case, the battery management system 23 is further configured to control the direct current converter corresponding to the any pair of battery modules to resume charging or discharging. During implementation of this embodiment of this application, when a fault of a direct current converter corresponding to any pair of battery modules is recovered, the direct current converter corresponding to the any pair of battery modules may be re-controlled to resume charging or discharging, thereby avoiding affecting active equalization efficiency of the battery module 21a to the battery module 21u.

In some feasible implementations, in a process of performing charging and discharging by the direct current converter corresponding to each pair of battery modules, when an output voltage of a direct current converter corresponding to any pair of battery modules is less than or equal to a preset voltage value, in other words, when an undervoltage fault occurs in the direct current converter corresponding to the any pair of battery modules, the battery management system 23 is configured to control the direct current converter corresponding to the any pair of battery modules to stop charging or discharging. For example, when the direct current converter charges the corresponding battery module, the preset voltage value may be 154 V. When the direct current converter supplies power to the direct current bus 22, the preset voltage value may be 315 V In a fault recovery process of the direct current converter corresponding to the any pair of battery modules, the output voltage of the direct current converter corresponding to the any pair of battery modules gradually increases to be greater than the preset voltage value. In this case, the battery management system 23 is further configured to control the direct current converter corresponding to the any pair of battery modules to resume charging or discharging. During implementation of this embodiment of this application, when a recoverable fault (for example, an undervoltage fault) occurs in a direct current converter corresponding to any pair of battery modules, the direct current converter corresponding to the any pair of battery modules may be controlled to stop charging or discharging and no longer performs active equalization, while another direct current converter that runs normally continues to perform active equalization, so that this can avoid the fact that all direct current converters corresponding to the n pairs of battery modules stop charging or discharging, thereby reducing impact on active equalization efficiency of the battery module 21a to the battery module 21u. In addition, when an undervoltage fault of a direct current converter corresponding to any pair of battery modules is recovered, the direct current converter corresponding to the any pair of battery modules may be re-controlled to resume charging or discharging, thereby avoiding affecting active equalization efficiency of the battery module 21a to the battery module 21u.

In some feasible implementations, in a process of performing charging and discharging by the direct current converter corresponding to each pair of battery modules, in first duration, when a quantity of times the direct current converter corresponding to the any pair of battery modules stops charging or discharging is greater than or equal to a third preset parameter value, in other words, when an unrecoverable fault occurs in the direct current converter corresponding to the any pair of battery modules, the battery management system 23 is configured to control a direct current converter corresponding to each of the n pairs of battery modules to stop charging or discharging. For example, the first duration may be 5s, and the third preset parameter value may be 10. It may be understood that a reason why the direct current converter corresponding to the any pair of battery modules stops charging or discharging may be that an overvoltage fault, an overcurrent fault, or an undervoltage fault occurs, which is not limited herein. During implementation of this embodiment of this application, an unrecoverable fault that occurs in a direct current converter can be prevented from spreading to another direct current converter that runs normally, thereby improving use safety and a service life of the direct current converters corresponding to the n pairs of battery modules.

It may be understood that, when different faults (for example, a recoverable fault or an unrecoverable fault) occur in the direct current converter corresponding to the battery module, the battery management system 23 uses different scheduling policies to control the direct current converters corresponding to the n pairs of battery modules, and a scheduling manner is more flexible.

In some feasible implementations, when no direct current converter corresponding to each pair of battery modules is faulty, or a fault that has occurred in a direct current converter corresponding to any pair of battery modules is recovered, after the first battery module in the pair of battery modules charges the second battery module for second duration through the direct current bus 22, the battery management system 23 is configured to control a direct current converter corresponding to each of the n pairs of battery modules to stop charging or discharging. The second duration is active equalization duration of the direct current converter. For example, the second duration may be 5 minutes or 10 minutes. During implementation of this embodiment of this application, active equalization duration of a direct current converter is limited, to avoid an increase in a capacity difference between battery modules caused by excessively long charging and discharging duration of a direct current converter corresponding to each pair of battery modules, thereby improving the active equalization efficiency of the battery module 21a to the battery module 21u.

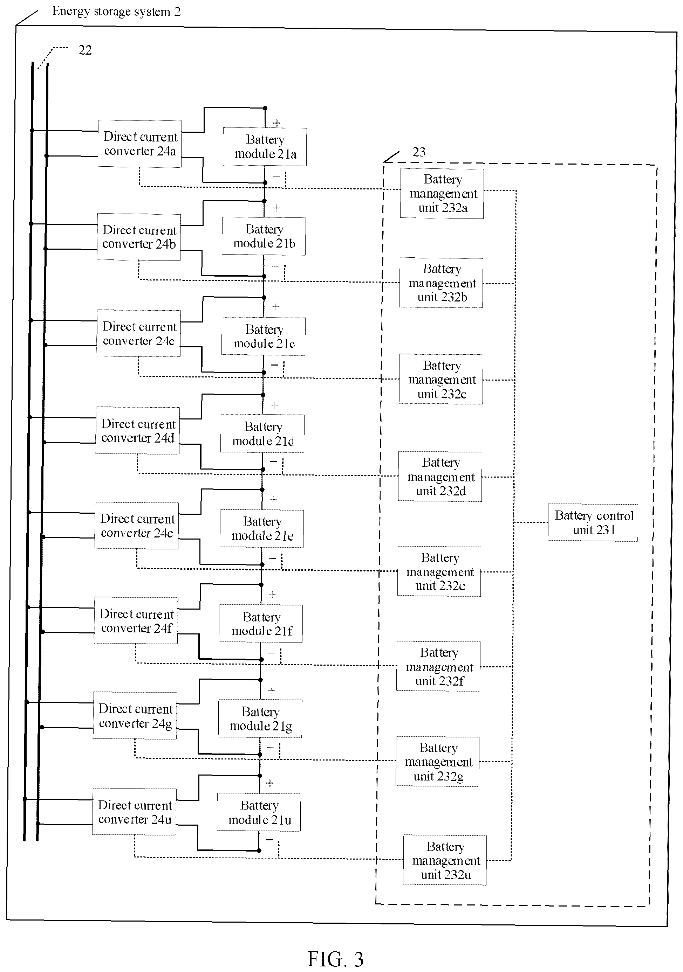

The following specifically describes one of the active equalization manners of the battery module 21a to the battery module 21u with reference to FIG. 3 to FIG. 6.

When the battery module 21a to the battery module 21u include eight battery modules, as shown in FIG. 3, the battery module 21a to the battery module 21u shown in FIG. 2 include the battery module 21a, the battery module 21b, the battery module 21c, the battery module 21d. the battery module 21e, the battery module 21f, the battery module 21g, and the battery module 21u. Correspondingly, the direct current converter 24a to the direct current converter 24u include the direct current converter 24a, the direct current converter 24b, the direct current converter 24c, the direct current converter 24d. the direct current converter 24e, the direct current converter 24f, the direct current converter 24g, and the direct current converter 24u. Correspondingly, the battery management system 23 shown in FIG. 2 includes a battery control unit (battery control unit, BCU) 231, a battery management unit (battery management unit, BMU) 232a, a battery management unit 232b, a battery management unit 232c, a battery management unit 232d, a battery management unit 232e, a battery management unit 232f, a battery management unit 232g, and a battery management unit 232u. The battery management unit 232a to the battery management unit 232u are in a one-to-one correspondence with the battery module 21a to the battery module 21u. The battery control unit 231 may perform data transmission with the battery management unit 232a to the battery management unit 232u through a CAN bus, for example, deliver a power-on instruction or a power-off instruction.

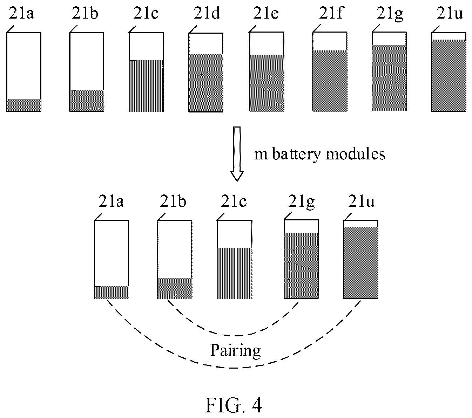

When active equalization is performed on the battery module 21a to the battery module 21u, the battery control unit 231 is configured to select m (for example, five) battery modules from the battery module 21a to the battery module 21u. For example, as shown in FIG. 4, after the five battery modules are sorted in ascending order of voltages of the battery modules, the five battery modules sequentially include the battery module 21a, the battery module 21b, the battery module 21c, the battery module 21g. and the battery module 21u. In FIG. 4, a gray part in a battery module indicates a voltage value of the battery module. Further, the battery control unit 231 is configured to pair the battery module 21a having a lowest voltage among the battery modules with the battery module 21u having a highest voltage among the battery modules, and pair the battery module 21b having a second lowest voltage among the battery modules with the battery module 21g having a second highest voltage among the battery modules, to obtain n (for example, 2) pairs of battery modules. The battery module 21a and the battery module 21b are second battery modules in two pairs of battery modules, and the battery module 21g and the battery module 21u are first battery modules in the two pairs of battery modules. The battery module 21a and the battery module 21u are a first pair of battery modules in the two pairs of battery modules, and the battery module 21b and the battery module 21g are a second pair of battery modules in the two pairs of battery modules. In this case, the battery module 21c is not paired, and is a battery module remaining after pairing in a current active equalization process.

After the two pairs of battery modules are obtained through pairing, the battery control unit 231 is configured to deliver a power-on instruction to a battery management unit corresponding to each pair of battery modules in the two pairs of battery modules. Further, a battery management unit corresponding to the first battery module in each pair of battery modules is configured to control, in response to the power-on instruction, a direct current converter corresponding to the first battery module to perform voltage conversion on a voltage output by the first battery module and supply power to the direct current bus 22. In this case, a battery management unit corresponding to the second battery module in each pair of battery modules is configured to control, in response to the power-on instruction, to perform voltage conversion on a voltage output by the direct current bus 22 and charge the second battery module. In specific implementation, when the direct current converter includes a control chip, an auxiliary power supply, a relay, and a direct current conversion circuit, the relay is connected between the control chip and the auxiliary power supply, and the auxiliary power supply may alternatively be disposed outside the direct current converter. This is not limited herein. An example in which the direct current converter 24u corresponding to the battery module 21u is powered on and runs is used for description. The battery management unit 232u is configured to: in response to a power-on instruction, obtain power from the battery module 21u, perform conversion, and then supply power to a control chip in the direct current converter 24u. Further, the control chip in the direct current converter 24u is configured to receive power supply, control the relay to be on, so that the auxiliary power supply supplies power to the control chip, and control the direct current converter 24u to supply power to the direct current bus 22. It should be noted that, after the direct current converter 24u is powered on and runs, the battery management unit 232u does not need to continue to supply power to the control chip in the direct current converter 24u, but the auxiliary power supply in the direct current converter 24u supplies power to the control chip, thereby avoiding consumption of power of the battery module 21u. It may be understood that, for a specific operation of powering on and running a direct current converter corresponding to another battery module in the two pairs of battery modules, refer to the foregoing specific operation of powering on and running the direct current converter 24u. Details are not described herein again. During implementation of this embodiment of this application, a structure in which the battery control unit 231 is combined with the battery management unit 232a to the battery management unit 232u is used to control, in pairs, charging and discharging of the direct current converter corresponding to each pair of battery modules, so that complexity and costs of the energy storage system 2 can be reduced, and overall performance and stability of the energy storage system 2 can be improved.

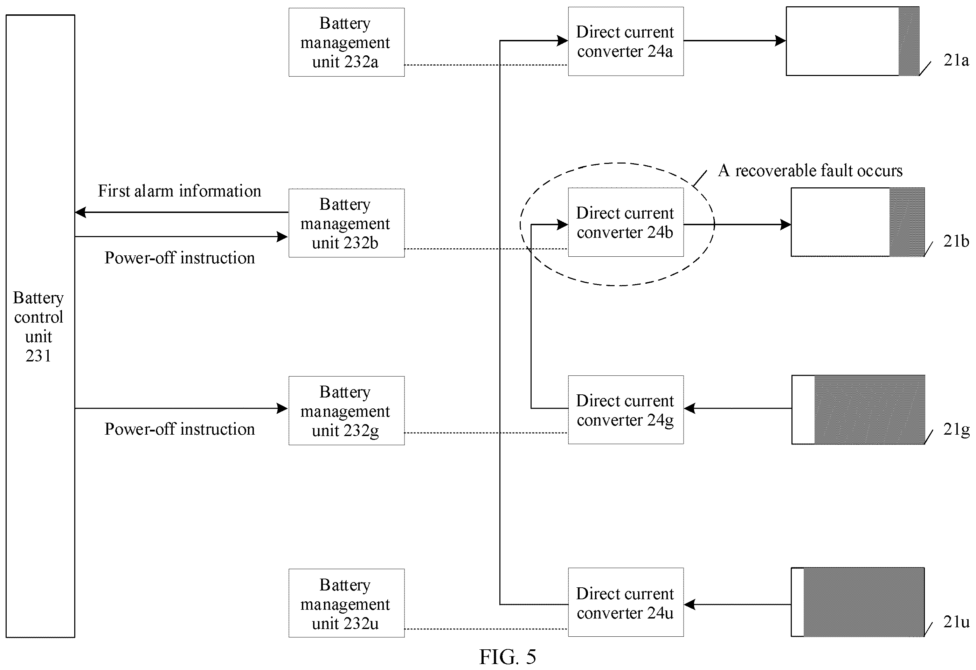

In a process of charging and discharging direct current converters corresponding to the two pairs of battery modules, as shown in FIG. 5, when a recoverable fault occurs in the direct current converter corresponding to one of the second pair of battery modules, for example, a recoverable fault occurs in the direct current converter 24b corresponding to the battery module 21b, the battery management unit 232b corresponding to the battery module 21b is configured to: when an output parameter of the direct current converter 24b is greater than or equal to the second preset parameter value, or an output voltage of the direct current converter 24b is less than or equal to a preset voltage value, output first alarm information to the battery control unit 231. Further, the battery control unit 231 is configured to parse the first alarm information to obtain a packet corresponding to the first alarm information, and when the packet corresponding to the first alarm information is the same as a corresponding packet when a recoverable fault occurs in the direct current converter, deliver a power-off instruction to the battery management unit 232b and the battery management unit 232g. Furthermore, the battery management unit 232g is configured to control, in response to the power-off instruction, the direct current converter 24g to stop discharging. The battery management unit 232b is configured to control, in response to the power-off instruction, the direct current converter 24b to stop charging. Optionally, the battery management unit 232b is configured to: when the output parameter of the direct current converter 24b is greater than or equal to the second preset parameter value, or the output voltage of the direct current converter 24b is less than or equal to the preset voltage value, control the direct current converter 24b to stop charging, and output the first alarm information to the battery control unit 231. Further, the battery control unit 231 is configured to deliver, in response to the first alarm information, the power-off instruction to the battery management unit 232g corresponding to the battery module 21g. Furthermore, the battery management unit 232g is configured to control, in response to the power-off instruction, the direct current converter 24g to stop discharging. During implementation of this embodiment of this application, a faulty direct current converter (for example, the direct current converter 24b) may be isolated more quickly, thereby improving security and a service life of the direct current converter.

In a fault recovery process of the direct current converter 24b, the battery management unit 232b is further configured to output a power-on request instruction to the battery control unit 231 when the output parameter of the direct current converter 24b is less than the second preset parameter value, or the output voltage of the direct current converter 24b is greater than the preset voltage value. Further, the battery control unit 231 is further configured to deliver the power-on instruction to the battery management unit 232b and the battery management unit 232g in response to the power-on request instruction. Furthermore, the battery management unit 232g is configured to control, in response to the power-on instruction, the direct current converter 24g to resume discharging. The battery management unit 232b is configured to control, in response to the power-on instruction, the direct current converter 24b to resume charging.

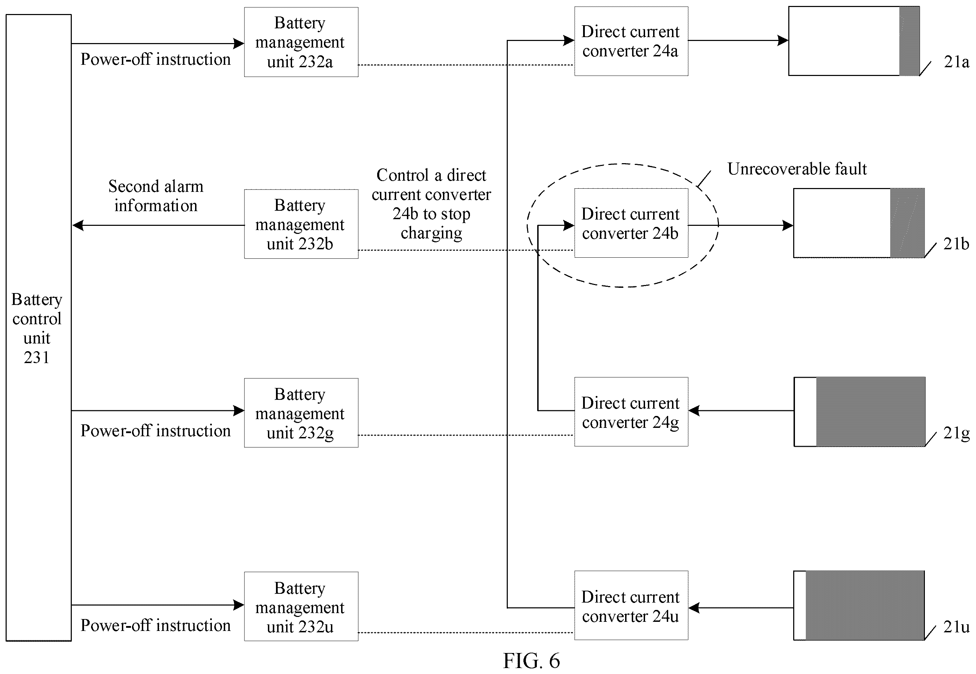

When an unrecoverable fault occurs in the direct current converter 24b, as shown in FIG. 6, in the first duration, when a quantity of times the direct current converter 24b and the direct current converter 24g stop charging or discharging is greater than or equal to the third preset parameter value, the battery management unit 232b is further configured to control the direct current converter 24b to stop charging, and output second alarm information to the battery control unit 231. Further, the battery control unit 231 is further configured to parse the second alarm information to obtain a packet corresponding to the second alarm information, and when the packet corresponding to the second alarm information is the same as a corresponding packet when an unrecoverable fault occurs in the direct current converter, deliver a power-off instruction to the battery management unit 232a, the battery management unit 232g, and the battery management unit 232u. Furthermore, the battery management unit 232a is configured to control, in response to the power-off instruction, the direct current converter 24a to stop charging. The battery management unit 232g is configured to control, in response to the power-off instruction, the direct current converter 24g to stop discharging. The battery management unit 232u is configured to control, in response to the power-off instruction, the direct current converter 24u to stop discharging.

When the direct current converters corresponding to the two pairs of battery modules are not faulty, or a fault of a direct current converter is recovered, after the first battery module in each pair of battery modules charges the second battery module for the second duration through the direct current bus 22, the battery control unit 231 is further configured to deliver the power-off instruction to the battery management unit corresponding to each pair of battery modules. Further, the battery management unit corresponding to the pair of battery modules is configured to control, in response to the power-off instruction, the direct current converter corresponding to the pair of battery modules to stop charging or discharging. In this case, the direct current converters corresponding to the two pairs of battery modules are all powered off and active equalization is no longer performed, in other words, current active equalization of the battery modules ends. In specific implementation, an example in which the direct current converter 24u corresponding to the battery module 21u is powered off is used for description. The battery management unit 232u is configured to output the power-off instruction to the control chip in the direct current converter 24u in response to the power-off instruction. Further, the control chip in the direct current converter 24u is configured to control, in response to the power-off instruction, a direct current conversion circuit in the direct current converter 24u to stop outputting. In this case, the relay still remains in a connected state. It may be understood that, for a specific operation of powering off a direct current converter corresponding to another battery module in the two pairs of battery modules, refer to the foregoing specific operation of powering off the direct current converter 24u. Details are not described herein again. During implementation of this embodiment of this application, when the active equalization duration reaches the second duration, the direct current converter corresponding to each pair of battery modules is controlled to be powered off, so that a quantity of times a relay in the direct current converter is frequently turned off can be reduced, thereby prolonging a service life of the relay in the direct current converter.

In some feasible implementations, the battery control unit 231 is further configured to: when duration in which the direct current converters corresponding to the two pairs of battery modules stop charging or discharging is greater than or equal to first power-off duration, re-obtain x pairs of battery modules from the five battery modules through pairing, and perform active equalization on the x pairs of battery modules. For details, refer to the description of performing active equalization on the two pairs of battery modules in the foregoing embodiment. Details are not described herein again. The first power-off duration may be specifically determined by working states of the battery modules. It should be understood that when a first battery module that needs to be discharged and a second battery module that needs to be charged in each of the x pairs of battery modules are the same as a first battery module that needs to be discharged and a second battery module that needs to be charged in each of the two pairs of battery modules, the first power-off duration is negatively correlated with a voltage difference or a state of charge difference between the two pairs of battery modules after the current active equalization ends. For example, the first power-off duration may be 0 minutes, 5 minutes, 10 minutes, or 15 minutes. Optionally, when the first battery module that needs to be discharged and the second battery module that needs to be charged in each of the x pairs of battery modules are different from the first battery module that needs to be discharged and the second battery module that needs to be charged in each of the two pairs of battery modules, for example, the first battery module that needs to be discharged and the second battery module that needs to be charged are exchanged with each other, or a battery module (for example, the battery module 21c) remaining after pairing in the current active equalization is added, the first power-off duration is greater than the first power-off duration when the first battery module that needs to be discharged and the second battery module that needs to be charged in each of the x pairs of battery packs are the same as the first battery module that needs to be discharged and the second battery module that needs to be charged in each of the two pairs of battery packs.

It may be understood that, when the first battery module that needs to be discharged and the second battery module that needs to be charged in each of the x pairs of battery modules are consistent with the first battery module that needs to be discharged and the second battery module that needs to be charged in each of the two pairs of battery modules, it may indicate that voltage fluctuation of the two pairs of battery modules is relatively small. When the first battery module that needs to be discharged and the second battery module that needs to be charged in each of the x pairs of battery modules are different from the first battery module that needs to be discharged and the second battery module that needs to be charged in each of the two pairs of battery modules, it may indicate that the voltage fluctuation of the two pairs of battery modules is relatively large. Therefore, the first power-off duration (for example, 20 minutes) needs to be prolonged to stabilize voltages of the two pairs of battery modules.

During implementation of this embodiment of this application, after the active equalization ends, a voltage of a battery module fluctuates. Therefore, the voltage of the battery module needs to be stabilized for a period of time (for example, greater than or equal to the first power-off duration) to stabilize the voltage of the battery module, and active equalization is performed again after the voltage of the battery module is stabilized, thereby improving active equalization efficiency of the battery module 21a to the battery module 21u.

In some feasible implementations, when duration in which the direct current converters corresponding to the two pairs of battery modules stop charging or discharging is greater than or equal to the first power-off duration, and some battery modules in the two pairs of battery modules are not in the x pairs of battery modules, the battery control unit 231 is configured to control direct current converters corresponding to the some battery modules in the two pairs of battery modules to sleep. In specific implementation, the battery control unit 231 is configured to deliver a sleep instruction to battery management units corresponding to the some battery modules in the two pairs of battery modules. Further, the battery management units corresponding to the some battery modules are configured to output, in response to the sleep instruction, a sleep instruction to control chips in the direct current converters corresponding to the some battery modules. Furthermore, the control chips in the direct current converters corresponding to the some battery modules are configured to control, in response to the sleep instruction, relays in the direct current converters corresponding to the some battery modules to be disconnected. In this case, auxiliary power supplies in the direct current converters corresponding to the some battery modules stop supplying power from the battery modules to the control chips, so as to avoid excessive consumption of power of the some battery modules, thereby improving active equalization efficiency of the battery module 21a to the battery module 21u.

In some feasible implementations, when power-off duration of all the direct current converters corresponding to the two pairs of battery modules is greater than or equal to the first power-off duration, and the x pairs of battery modules are the same as the two pairs of battery modules, the battery control unit 231 does not need to control direct current converters corresponding to the x pairs of battery modules to sleep, but directly controls the direct current converters corresponding to the x pairs of battery modules to perform active equalization. During implementation of this embodiment of this application, a quantity of times a relay in the direct current converter is frequently turned off can be reduced, thereby prolonging a service life of the relay in the direct current converter.

It may be understood that the battery management system 23 (to be specific, the battery control unit 231 and the battery management unit 232a to the battery management unit 232u) may repeatedly perform the foregoing operation of performing active equalization on the paired battery modules, to continuously reduce a battery capacity difference between the battery module 21a to the battery module 21u until energy balancing between the battery module 21a to the battery module 21u is implemented, thereby avoiding a capacity mismatch problem in a charge and discharge process of the battery modules.

The following describes another active equalization manner of the battery module 21a to the battery module 21u.

In some feasible implementations, when active equalization is performed on the battery module 21a to the battery module 21u, the battery management system 23 is configured to obtain s pairs of battery modules from the battery module 21a to the battery module 21u through pairing. A second battery parameter of each of the s pairs of battery modules is greater than or equal to a fourth preset parameter value. For example, the fourth preset parameter value may be 95%. Each of the s pairs of battery modules includes a third battery module and a fourth battery module, and a third battery parameter of the third battery module is greater than a third battery parameter of the fourth battery module. The second battery parameter is an absolute value of a difference between a state of charge (state of charge, SOC) of the battery module and an average value of states of charge of the battery module 21a to the battery module 21u, and the third battery parameter is the difference between the state of charge of the battery module and the average value of the states of charge. Further, the battery management system 23 is further configured to control the third battery module in the pair of battery modules to charge the fourth battery module through the direct current bus 22, so as to reduce a battery capacity difference between the third battery module and the fourth battery module in the pair of battery modules. During implementation of this embodiment of this application, each pair of battery modules can always run at full power in a charge and discharge process, thereby improving active equalization efficiency of the battery module 21a to the battery module 21u, and reducing a battery capacity difference between the battery module 21a to the battery module 21u more quickly.

In some feasible implementations, a state of charge SOC1 of a battery module may be determined according to Formula (1) below: $SOC 1 = \left(100%-SOC2\right) ∗ SOC 3 ∗ SOH$

In Formula (1), SOC2 is used to represent a current state of charge of the battery module, SOC3 is used to represent a rated capacity of the battery module, and SOH is used to represent a valid value of a state of health of the battery module. The battery management system 23 is configured to determine a state of charge SOC1 of each of the battery module 21a to the battery module 21u according to Formula (1), and further obtain an average value *SOC*1 of the states of charge of the battery module 21a to the battery module 21u.

In some feasible implementations, the second battery parameter may alternatively be replaced with an absolute value of an equalization time of a battery module. In this case, the fourth preset parameter value is a preset equalization time value. The third battery parameter may alternatively be replaced with the equalization time of the battery module. The equalization time t of the battery module may be determined according to Formula (2) and Formula (3) below. $t = SOC 4 / I$ $SOC 4 = \left(SOC1-\overline{SOC 1}\right) ∗ 0.9$

In Formula (2), SOC4 is used to represent an equalization capacity of the battery module, and I is used to represent a rated current of a direct current converter corresponding to the battery module. For example, the rated current may be 5.7 A or 6.6 A. In Fonnula (3), 0.9 may alternatively be replaced with another value, which may be specifically determined by an actual application scenario of the energy storage system 2, and is not limited herein.

In some feasible implementations, when active equalization is performed on the battery module 21a to the battery module 21u, the battery management system 23 is configured to select j battery modules from the battery module 21a to the battery module 21u. A second battery parameter of each of the j battery modules is greater than or equal to a fourth preset parameter value. The j battery modules may be sorted in descending order or in ascending order of third battery parameters of the battery modules. Further, the battery management system 23 is further configured to pair a k^{th} battery module in the j battery modules with a (j+1-k)^{th} battery module, to obtain the s pairs of battery modules. During implementation of this embodiment of this application, the j to-be-equalized battery modules may be paired in pairs based on values of third battery parameters of the battery modules, to ensure that the s pairs of paired battery modules always run at full power in a charge and discharge process, thereby improving active equalization efficiency of the battery module 21a to the battery module 21u.

In some feasible implementations, for each of the pairs of battery modules, a direct current converter corresponding to the third battery module is configured to perform voltage conversion on a voltage output by the third battery module, and supply power to the direct current bus 22. A direct current converter corresponding to the fourth battery module is configured to perform voltage conversion on a voltage output by the direct current bus 22, and charge the fourth battery module. During implementation of this embodiment of this application, in this active equalization process, control logic based on an equalization algorithm model does not need to be used, so that control complexity of the direct current converter is reduced, and maintenance costs of the energy storage system 2 are reduced.

In some feasible implementations, in a process of performing active equalization on the battery module 21a to the battery module 21u, when an output parameter of a direct current converter corresponding to any pair of battery modules is greater than or equal to a second preset parameter value, the battery management system 23 is configured to control the direct current converter corresponding to the any pair of battery modules to stop charging or discharging. The output parameter includes an output voltage or an output current of the direct current converter. During implementation of this embodiment of this application, a faulty direct current converter may be isolated to prevent a fault from spreading to another direct current converter that runs normally, thereby reducing a potential risk caused by the fault and scheduling policy complexity. In addition, this can further avoid the fact that all direct current converters corresponding to the s pairs of battery modules stop charging or discharging, thereby reducing impact on active equalization efficiency of the battery module 21a to the battery module 21u.

In some feasible implementations, in a fault recovery process of the direct current converter corresponding to the any pair of battery modules, an output parameter of the direct current converter corresponding to the any pair of battery modules gradually decreases to be less than the second preset parameter value, in other words, the fault of the direct current converter corresponding to the any pair of battery modules is recovered. In this case, the battery management system 23 is further configured to control the direct current converter corresponding to the any pair of battery modules to resume charging or discharging, thereby avoiding the impact on the active equalization efficiency of the battery module 21a to the battery module 21u.

In some feasible implementations, in a process of performing charging and discharging by the direct current converter corresponding to each pair of battery modules, when an output voltage of a direct current converter corresponding to any pair of battery modules is less than or equal to a preset voltage value, in other words, when an undervoltage fault occurs in the direct current converter corresponding to the any pair of battery modules, the battery management system 23 is configured to control the direct current converter corresponding to the any pair of battery modules to stop charging or discharging. In a fault recovery process of the direct current converter corresponding to the any pair of battery modules, the output voltage of the direct current converter corresponding to the any pair of battery modules gradually increases to be greater than the preset voltage value. In this case, the battery management system 23 is further configured to control the direct current converter corresponding to the any pair of battery modules to resume charging or discharging. During implementation of this embodiment of this application, this can avoid the fact that all direct current converters corresponding to the s pairs of battery modules stop charging or discharging, thereby reducing impact on active equalization efficiency of the battery module 21a to the battery module 21u. In addition, when an undervoltage fault of a direct current converter corresponding to any pair of battery modules is recovered, the direct current converter corresponding to the any pair of battery modules may be re-controlled to resume charging or discharging, thereby avoiding affecting active equalization efficiency of the battery module 21a to the battery module 21u.

In some feasible implementations, in a process of performing active equalization on the battery module 21a to the battery module 21u, in first duration, when a quantity of times the direct current converter corresponding to the any pair of battery modules stops charging or discharging is greater than or equal to a third preset parameter value, the battery management system 23 is configured to control a direct current converter corresponding to each of the s pairs of battery modules to stop charging or discharging. During implementation of this embodiment of this application, an unrecoverable fault that occurs in a direct current converter can be prevented from spreading to another direct current converter that runs normally, thereby improving use safety and a service life of the direct current converters corresponding to the s pairs of battery modules.

In some feasible implementations, after the third battery module in the pair of battery modules charges the fourth battery module for second duration through the direct current bus, the battery management system 23 is configured to control a direct current converter corresponding to each of the s pairs of battery modules to stop charging or discharging. During implementation of this embodiment of this application, active equalization duration of a direct current converter is limited, to avoid an increase in a capacity difference between battery modules caused by excessively long charging and discharging duration of a direct current converter corresponding to each pair of battery modules, thereby improving the active equalization efficiency of the battery module 21a to the battery module 21u.

It may be understood that, for a specific operation and beneficial effects of performing active equalization on the s pairs of battery modules by the battery management system 23, refer to the description of performing active equalization on the n pairs of battery modules by the battery management system 23 in the embodiments corresponding to FIG. 2 to FIG. 6. Details are not described herein again.

In some feasible implementations, the battery module 21a to the battery module 21u, the direct current bus 22, and the battery management system 23 may form a battery cluster in the energy storage system 2, and the energy storage system 2 may alternatively include a plurality of battery clusters. The battery management system 23 is further configured to perform active equalization on a plurality of battery modules in each of the plurality of battery clusters. For a specific process, refer to the description of performing active equalization on the battery module 21a to the battery module 21u in the embodiments corresponding to FIG. 2 to FIG. 6. Details are not described herein again. It may be understood that, each battery cluster may independently use one direct current bus, or the plurality of battery clusters share a same direct current bus. In addition, each battery cluster may independently use one battery management system, or the plurality of battery clusters share one battery management system.

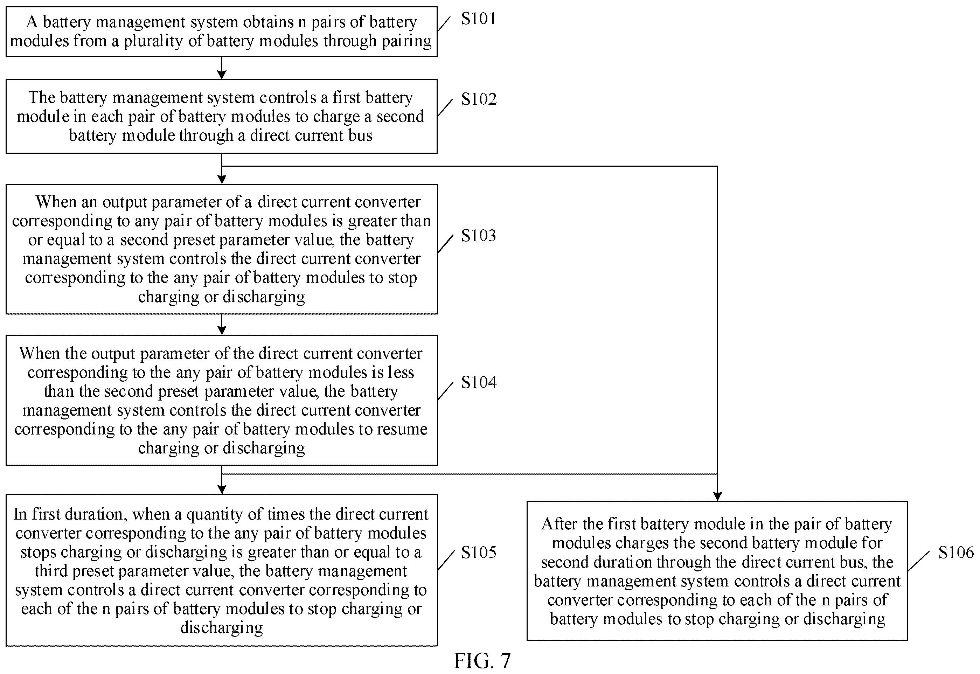

FIG. 7 is a schematic flowchart of an active equalization method for an energy storage system according to an embodiment of this application. The active equalization method is usually performed by a battery management system in an energy storage system. Specifically, as shown in FIG. 7, the active equalization method includes step S101 to step S106 below.

Step S101: The battery management system obtains n pairs of battery modules from a plurality of battery modules through pairing.

In step S101, the energy storage system includes the plurality of battery modules, a direct current bus, and a battery management system, and each of the plurality of battery modules is connected to the direct current bus. A first battery parameter of each of the n pairs of battery modules is greater than or equal to a first preset parameter value. Each of the n pairs of battery modules includes a first battery module and a second battery module, and a voltage of the first battery module is greater than a voltage of the second battery module. The first battery parameter may be an absolute value of a difference between a maximum voltage value and a minimum voltage value of the battery modules.

In specific implementation, the battery management system selects m battery modules from the plurality of battery modules. A first battery parameter of each of the m battery modules is greater than or equal to the first preset parameter value. The m battery modules may be sorted in descending order or in ascending order of voltages of the battery modules. Further, the battery management system pairs an i^{th} battery module in the m battery modules with an (m+1-i)^{th} battery module, to obtain the n pairs of battery modules.

Step S102: The battery management system controls the first battery module in the pair of battery modules to charge the second battery module through the direct current bus.

In specific implementation, for each of the pairs of battery modules, the battery management system controls a direct current converter corresponding to the first battery module to perform voltage conversion on a voltage output by the first battery module and supply power to the direct current bus, and controls a direct current converter corresponding to the second battery module to perform voltage conversion on a voltage output by the direct current bus and charge the second battery module. The energy storage system further includes a plurality of direct current converters, the plurality of direct current converters are in a one-to-one correspondence with the plurality of battery modules, and each of the battery modules is connected to the direct current bus by using a corresponding direct current converter.

Step S103: When an output parameter of a direct current converter corresponding to any pair of battery modules is greater than or equal to a second preset parameter value, the battery management system controls the direct current converter corresponding to the any pair of battery modules to stop charging or discharging.

In step S103, the output parameter includes an output voltage or an output current of the direct current converter.

Step S104: When the output parameter of the direct current converter corresponding to the any pair of battery modules is less than the second preset parameter value, the battery management system controls the direct current converter corresponding to the any pair of battery modules to resume charging or discharging.

Step S105: In first duration, when a quantity of times the direct current converter corresponding to the any pair of battery modules stops charging or discharging is greater than or equal to a third preset parameter value, the battery management system controls a direct current converter corresponding to each of the n pairs of battery modules to stop charging or discharging.

Step S106: After the first battery module in the pair of battery modules charges the second battery module for second duration through the direct current bus, the battery management system controls a direct current converter corresponding to each of the n pairs of battery modules to stop charging or discharging.

In specific implementation, for more operations performed by the battery management system in the active equalization method for the energy storage system provided in this application and corresponding beneficial effects, refer to the implementations performed by the battery management system 23 in the energy storage system 2 shown in FIG. 2 to FIG. 6 and the working principles of the energy storage system 2 and the corresponding beneficial effects. Details are not described herein again.

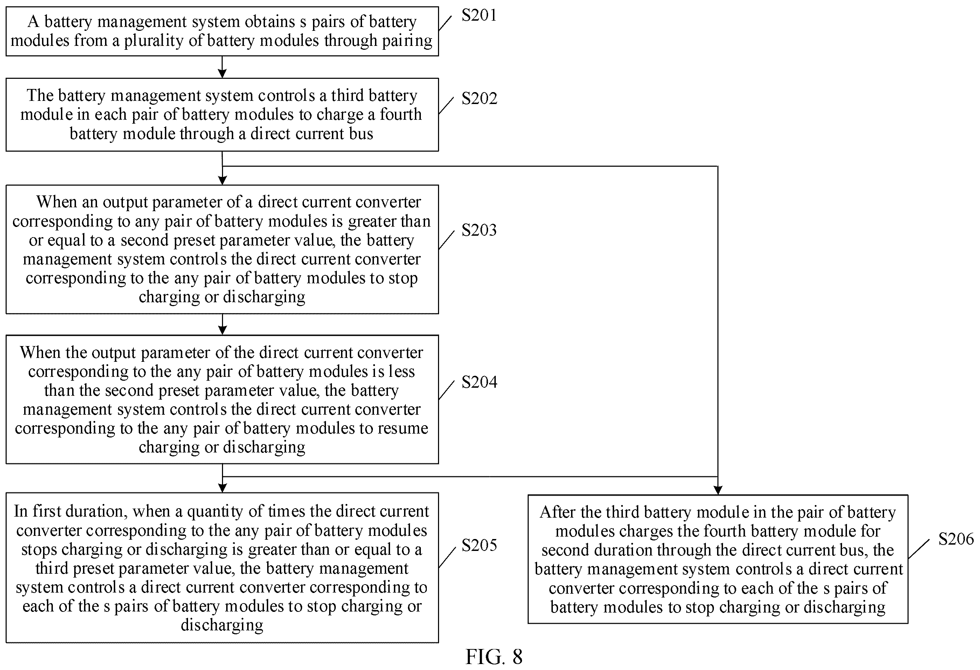

FIG. 8 is another schematic flowchart of an active equalization method for an energy storage system according to an embodiment of this application. The active equalization method is usually performed by a battery management system in an energy storage system. Specifically, as shown in FIG. 8, the active equalization method includes step S201 to step S206 below.

Step S201: The battery management system obtains s pairs of battery modules from a plurality of battery modules through pairing.

In step S201, the energy storage system includes the plurality of battery modules, a direct current bus, and a battery management system, and each of the plurality of battery modules is connected to the direct current bus. A second battery parameter of each of the s pairs of battery modules is greater than or equal to a fourth preset parameter value. Each of the s pairs of battery modules includes a third battery module and a fourth battery module, and a third battery parameter of the third battery module is greater than a third battery parameter of the third battery module. The second battery parameter is an absolute value of a difference between a state of charge of the battery module and an average value of states of charge of the plurality of battery modules, and the third battery parameter is the difference between the state of charge of the battery module and the average value of the states of charge.

In specific implementation, when active equalization is performed on the plurality of battery modules, the battery management system selects j battery modules from the plurality of battery modules. A second battery parameter of each of the j battery modules is greater than or equal to a fourth preset parameter value. The j battery modules may be sorted in descending order or in ascending order of third battery parameters of the battery modules. Further, the battery management system is further configured to pair a k^{th} battery module in the j battery modules with a (j+1-k)^{th} battery module, to obtain the s pairs of battery modules.

Step S202: The battery management system controls the third battery module in the pair of battery modules to charge the fourth battery module through the direct current bus.

In specific implementation, for each of the pairs of battery modules, the battery management system controls a direct current converter corresponding to the third battery module to perform voltage conversion on a voltage output by the third battery module and supply power to the direct current bus, and controls a direct current converter corresponding to the fourth battery module to perform voltage conversion on a voltage output by the direct current bus and charge the fourth battery module. The energy storage system further includes a plurality of direct current converters, the plurality of direct current converters are in a one-to-one correspondence with the plurality of battery modules, and each of the battery modules is connected to the direct current bus by using a corresponding direct current converter.

Step S203: When an output parameter of a direct current converter corresponding to any pair of battery modules is greater than or equal to a second preset parameter value, the battery management system controls the direct current converter corresponding to the any pair of battery modules to stop charging or discharging.

In step S203, the output parameter includes an output voltage or an output current of the direct current converter.

Step S204: When the output parameter of the direct current converter corresponding to the any pair of battery modules is less than the second preset parameter value, the battery management system controls the direct current converter corresponding to the any pair of battery modules to resume charging or discharging.

Step S205: In first duration, when a quantity of times the direct current converter corresponding to the any pair of battery modules stops charging or discharging is greater than or equal to a third preset parameter value, the battery management system controls a direct current converter corresponding to each of the s pairs of battery modules to stop charging or discharging.

Step S206: After the third battery module in the pair of battery modules charges the fourth battery module for second duration through the direct current bus, the battery management system controls a direct current converter corresponding to each of the s pairs of battery modules to stop charging or discharging.

In specific implementation, for more operations performed by the battery management system in the active equalization method for the energy storage system provided in this application and corresponding beneficial effects, refer to the implementations performed by the battery management system 23 in the energy storage system 2 shown in FIG. 2 to FIG. 6 and the working principles of the energy storage system 2 and the corresponding beneficial effects. Details are not described herein again.

In the active equalization method for an energy storage system provided in this application, active equalization efficiency of the plurality of battery modules can be improved, and a battery capacity difference between the plurality of battery modules can be reduced more quickly. In addition, in this active equalization process, control logic based on an equalization algorithm model does not need to be used, so that control complexity of the plurality of direct current converters is reduced, and maintenance costs of the energy storage system are reduced.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An energy storage system, wherein the energy storage system comprises a plurality of battery modules, a direct current bus, and a battery management system, and each of the battery modules is connected to the direct current bus; and
the battery management system is configured to:
obtain n pairs of battery modules from the plurality of battery modules through pairing, wherein a first battery parameter of each of the n pairs of battery modules is greater than or equal to a first preset parameter value, each pair of battery modules comprises a first battery module and a second battery module, a voltage of the first battery module is greater than a voltage of the second battery module, and the first battery parameter is an absolute value of a difference between a maximum voltage value and a minimum voltage value of the battery modules; and
control the first battery module in the pair of battery modules to charge the second battery module through the direct current bus.

2. The energy storage system according to claim 1, wherein the battery management system is configured to:
select m battery modules from the plurality of battery modules, wherein a first battery parameter of each of the m battery modules is greater than or equal to the first preset parameter value, and the m battery modules are sorted in descending order or in ascending order of voltages of the battery modules; and
pair an i^{th} battery module in the m battery modules with an (m+1-i)^{th} battery module, to obtain the n pairs of battery modules.

3. The energy storage system according to claim 1 or 2. wherein the energy storage system further comprises a plurality of direct current converters, the plurality of direct current converters are in a one-to-one correspondence with the plurality of battery modules, and each of the battery modules is connected to the direct current bus by using a corresponding direct current converter;
a direct current converter corresponding to the first battery module is configured to perform voltage conversion on a voltage output by the first battery module, and supply power to the direct current bus; and
a direct current converter corresponding to the second battery module is configured to perform voltage conversion on a voltage output by the direct current bus, and charge the second battery module.

4. The energy storage system according to claim 3, wherein when an output parameter of a direct current converter corresponding to any pair of battery modules is greater than or equal to a second preset parameter value, the battery management system is configured to control the direct current converter corresponding to the any pair of battery modules to stop charging or discharging, wherein the output parameter comprises an output voltage or an output current of the direct current converter.

5. The energy storage system according to claim 4, wherein when the output parameter of the direct current converter corresponding to the any pair of battery modules is less than the second preset parameter value, the battery management system is configured to control the direct current converter corresponding to the any pair of battery modules to resume charging or discharging.

6. The energy storage system according to claim 5, wherein in first duration, when a quantity of times the direct current converter corresponding to the any pair of battery modules stops charging or discharging is greater than or equal to a third preset parameter value, the battery management system is configured to control a direct current converter corresponding to each of the n pairs of battery modules to stop charging or discharging.

7. The energy storage system according to any one of claims 3 to 5, wherein after the first battery module in the pair of battery modules charges the second battery module for second duration through the direct current bus, the battery management system is configured to control a direct current converter corresponding to each of the n pairs of battery modules to stop charging or discharging.

8. An energy storage system, wherein the energy storage system comprises a plurality of battery modules, a direct current bus, and a battery management system, and each of the battery modules is connected to the direct current bus; and
the battery management system is configured to:
obtain s pairs of battery modules from the plurality of battery modules through pairing, wherein a second battery parameter of each of the s pairs of battery modules is greater than or equal to a fourth preset parameter value, each pair of battery modules comprises a third battery module and a fourth battery module, a third battery parameter of the third battery module is greater than a third battery parameter of the fourth battery module, the second battery parameter is an absolute value of a difference between a state of charge of the battery module and an average value of states of charge of the plurality of battery modules, and the third battery parameter is the difference between the state of charge of the battery module and the average value of the states of charge; and
control the third battery module in the pair of battery modules to charge the fourth battery module through the direct current bus.

9. The energy storage system according to claim 8, wherein the battery management system is configured to:
select j battery modules from the plurality of battery modules, wherein a second battery parameter of each of the j battery modules is greater than or equal to the fourth preset parameter value, and the j battery modules are sorted in descending order or in ascending order of third battery parameters; and
pair a k^{th} battery module in the j battery modules with a (j+1-k)^{th} battery module, to obtain the s pairs of battery modules.

10. The energy storage system according to claim 8 or 9, wherein the energy storage system further comprises a plurality of direct current converters, the plurality of direct current converters are in a one-to-one correspondence with the plurality of battery modules, and each of the battery modules is connected to the direct current bus by using a corresponding direct current converter;
a direct current converter corresponding to the third battery module is configured to perform voltage conversion on a voltage output by the third battery module, and supply power to the direct current bus; and
a direct current converter corresponding to the fourth battery module is configured to perform voltage conversion on a voltage output by the direct current bus, and charge the fourth battery module.

11. The energy storage system according to claim 10, wherein when an output parameter of a direct current converter corresponding to any pair of battery modules is greater than or equal to a second preset parameter value, the battery management system is configured to control the direct current converter corresponding to the any pair of battery modules to stop charging or discharging, wherein the output parameter comprises an output voltage or an output current of the direct current converter.

12. The energy storage system according to claim 11, wherein when the output parameter of the direct current converter corresponding to the any pair of battery modules is less than the second preset parameter value, the battery management system is configured to control the direct current converter corresponding to the any pair of battery modules to resume charging or discharging.

13. The energy storage system according to claim 11, wherein in first duration, when a quantity of times the direct current converter corresponding to the any pair of battery modules stops charging or discharging is greater than or equal to a third preset parameter value, the battery management system is configured to control a direct current converter corresponding to each of the s pairs of battery modules to stop charging or discharging.

14. The energy storage system according to any one of claims 10 to 12, wherein after the third battery module in the pair of battery modules charges the fourth battery module for second duration through the direct current bus, the battery management system is configured to control a direct current converter corresponding to each of the s pairs of battery modules to stop charging or discharging.

15. An active equalization method for an energy storage system, wherein the method comprises:
obtaining n pairs of battery modules from a plurality of battery modules through pairing, wherein the energy storage system comprises the plurality of battery modules and a direct current bus, each of the battery modules is connected to the direct current bus, a first battery parameter of each of the n pairs of battery modules is greater than or equal to a first preset parameter value, each pair of battery modules comprises a first battery module and a second battery module, a voltage of the first battery module is greater than a voltage of the second battery module, and the first battery parameter is an absolute value of a difference between a maximum voltage value and a minimum voltage value of the battery modules; and
controlling the first battery module in the pair of battery modules to charge the second battery module through the direct current bus.
